(19) Europäisches Patentamt
European Patent Office
Office européen des brevets

(11) **EP 2 199 880 A1**

(12) **EUROPEAN PATENT APPLICATION**

(43) Date of publication:
**23.06.2010 Bulletin 2010/25**

(51) Int Cl.:
***G05B 13/04*** (2006.01)   ***G05B 19/404*** (2006.01)
***G05B 19/416*** (2006.01)   ***B25J 9/10*** (2006.01)
***B25J 9/16*** (2006.01)   ***B25J 13/08*** (2006.01)

(21) Application number: 08425807.8

(22) Date of filing: **19.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Sintesi SCpA**
**70026 Modugno, BA (IT)**

(72) Inventors:
• Guadagno, Gianluca
  70026 Modugno (Bari) (IT)
• Palladino, Marco
  70026 Modugno (Bari) (IT)

(74) Representative: **Notaro, Giancarlo**
**Buzzi, Notaro & Antonielli d'Oulx**
**Via Maria Vittoria 18**
**10123 Torino (IT)**

(54) **Method and system for estimating the position of a series of articulated elements**

(57)     A method and a system for estimating the position of a series of articulated elements (or "links") being part of a machine are described, wherein said articulated elements are connected between each other by means of articulated joints, said series terminating with a final articulated element. The articulated joints are associated with the corresponding motors. According to such method, the linear and angular acceleration of the final articulated element are determined (12), the positions of the motors ($q_j$) are measured (14), and the positions of the articulated elements ($\hat{q}_l$) are estimated (20) as a function of the linear and angular acceleration (12) of the final articulated element and of the positions of the motors ($q_j$).

*Fig. 1*

**Description**

<u>Field of the invention</u>

The present invention relates to a method and a system for estimating the position of a series of articulated elements (or "links") being part of a machine wherein said articulated elements are connected between each other by means of articulated joints of prismatic or rotary type, said series terminating with a final articulated element, and wherein a plurality of motors are respectively associated with the articulated joints.

The present invention has been developed particularly for the control of the mechanical oscillations of an arm of an industrial machine.

<u>Background of the invention</u>

The market of industrial machines, for example anthropomorphic and Cartesian robots, requires increasingly higher speeds, high accuracy and reduced construction costs. All this translates into a considerable reduction of the masses with the possible lowering of the resonant frequencies of the mechanical structure. Therefore, the task of eliminating the vibrations relative to the resonances of the machine is often assigned to numerical control.

Following a movement, the elasticity in industrial machines can cause an oscillation of the manipulator arm. For example, such elasticity can be attributed to:

- motion transmission elements such as belts, planetary reduction gears or "Harmonic Drive";
- limited stiffness of the structural elements (links) of the machine , whose impact increases as the maximum load, the motion speed and numerical control band increase.
- the parasitic degrees of freedom linked to the complexity of the mechanical structure. The multi-stage reduction gears contained in industrial robots are an example of this; they introduce high-frequency resonances, generally neglected during the design stage. Further parasitical degrees of freedom can come from the non-infinite stiffness of the bearings.

In current terminology, the term "mechanical vibrations" usually refers to dynamic processes in which bodies are subject to periodic excitations of different types that can reach very high frequencies, in the region of hundreds of Hertz. The word "oscillations" usually refers to disturbances having a vibratory nature at relatively low frequency and considerable amplitude of the movement. For example, in the case of industrial manipulators the first oscillation frequencies can be at 5-6 Hz with maximum amplitudes in the region of millimetres for typical movement cycles.

Various studies have proven that oscillations can be dampened by exploiting the same motors of the system, in order to obtain advantages in terms of accuracy, reduction of the cycle time, greater homogeneity in the machine behaviour in the working area and less absorption of current.

Particularly, the use of external sensors for the control of oscillations in industrial machines has been the subject of numerous studies and continues to be so. The main sensors used are accelerometers, one of which is mounted on the Tool Center Point (TCP) and the others are mounted on the structure, torque sensors mounted on each joint, extensometers for measuring the deformation of each link and position sensors for each joint.

For example, the document DE 19 942 738 describes a method for improving the dynamic characteristics, envisaging the use of accelerometers in order to measure the acceleration in some points along the arm of a robot consisting of several links independently actuated. On each of these links an accelerometer is positioned so as to use the information generated by it in the control of motors in order to eliminate the oscillations. The correction is provided as a current signal for the motors.

<u>Summary of the invention</u>

The object of the invention is that of realizing a method for estimating the position of a series of links being part of a machine, being less expensive and reaching excellent results for control at the same time.

With a view to reaching the above-mentioned object, the scope of the invention is an estimation method of the type described in the appended claim 1.

Further advantageous characteristics of the invention form the scope of the appended dependent claims.

In one embodiment, a measuring system being able to measure the linear and angular acceleration of a single point of the arm and not of several points arranged along the kinematic structure is used.

The algorithm proposed works in an interval of frequencies limited by the actuation band of the motors and the limit can be approximately established at around 50 Hz. In one embodiment, on the final link of an industrial manipulator a system of sensors is mounted in order to measure the linear and angular acceleration of a point on the arm. The system also comprises sensors for measuring the positions of the motors, for example by means of an encoder, a resolver or a laser system.

The data measured are provided to an information fusion system providing the outgoing estimation of the position of the manipulator joints.

In one embodiment, a Kalman filter is used to merge the information between the acceleration measuring system and the motor position measuring system.

In one embodiment, the information on the kinematic data of the manipulation structure is used for such an estimation, for example the Denavit-Hartenberg parameters.

In one embodiment, the information on the measurement uncertainty of the motor position sensors and of the linear/angular acceleration of a point on the arm is used.

In one embodiment, the information on the elastic characteristics of the structure, particularly the equivalent stiffness of the joints, is used for such an estimation.

In one embodiment, the torque signals are estimated based on the estimation of the stiffness of the structure's elements.

In one embodiment, a corrective contribution is injected into the motion control ring of the manipulator/machine. Such intervention can be performed on the current, speed and/or position.

In one embodiment, the experimented control architectures refer to the classical motion control schemes such as cascaded speed PI and position P regulators with speed and acceleration feedforward.

In one embodiment, the oscillation control is based on non-conventional control strategies such as state feedback or the use of "modal" filters.

Brief description of the drawings

The invention will now be described with reference to the attached drawings, provided by way of a non-limitative example, in which:

- Figure 1 shows a block diagram of the general structure of a control system; and
- Figure 2 displays the parameters of a flexible link.

Detailed description of the invention

An arm of an industrial machine generally consists of articulated elements (links) connected by means of articulated joints, with which the respective motors are associated.

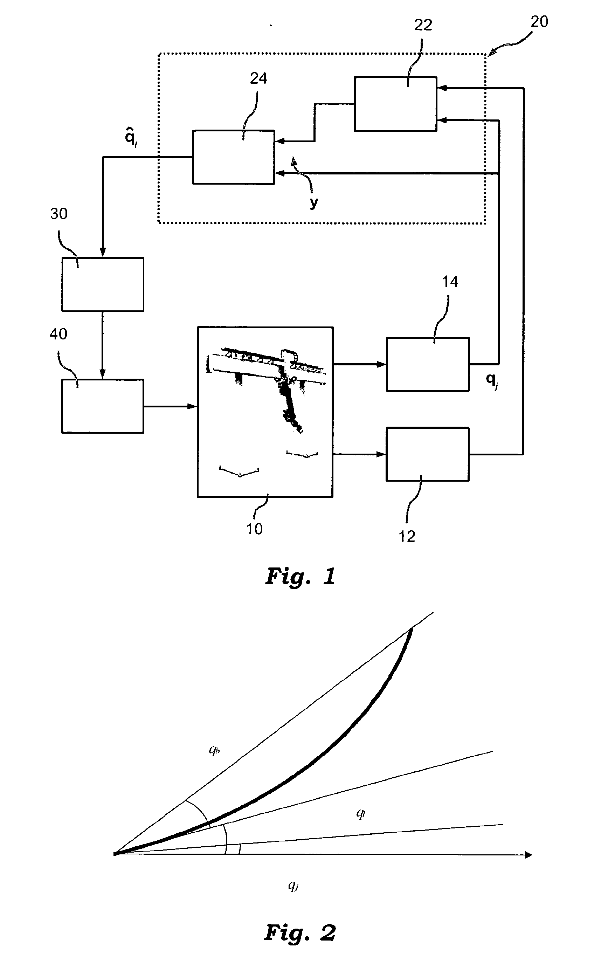

Figure 1 shows the general structure of a control system, wherein a module 40 controls the operation of the motors of an arm 10 of an industrial manipulator.

In this embodiment it is envisaged that on the last link of the arm 10 a sensor system 12 is mounted for measuring the linear and angular acceleration of a point of arm 10. For example, a direct acceleration sensor (DAS) may used for this object. The system also comprises sensors 14 for measuring the positions of the motors, for example by means of an encoder, a resolver or a laser system.

The data measured are provided to a block 20 implementing an information merging method and providing the outgoing estimation of the position of the machine's articulated joints.

These estimations are further used in a block 30 for calculating the correction data in order to compensate the mechanical oscillations of the machine.

Below the detail is provided of a possible method for estimating the position of the articulated joints based on the Kalman filters.

In one embodiment, block 20 comprises two main modules: a Kinematic Kalman Filter (KKF) 22 and a Modal Kalman Filter (MKF) 24.

Module 22 is appointed for estimating the speed on the tip of the structure starting from the measurements of the arm encoders and from the DAS measurements.

With reference to Figure 2, we have assumed that for each joint it was possible to write the following equation:

$$q_l = q_j + \Delta q$$

$$q = q_l + q_b$$

where $\mathbf{q}_j$ are the angular positions of the joints, $\mathbf{q}_1$ are the angular positions of the links and the quantity $\mathbf{q}_b$ represents the deviation with respect to the overall angular position of the link only due to its elastic deformation. Then, the angular positions at the joints are equal to those at the encoders plus a certain rate due to the elasticity of the joints and the overall angular position is formed by the angular position at the joint plus another rate due to the flexibility of the links ($q_b$, where 'b' stands for "beam").

In one embodiment, module 22 estimates the speed relative to the overall angular position using the following linear time-variant model:

$$\mathbf{x}_{k+1} = \mathbf{F}\mathbf{x}_k + \mathbf{G}\mathbf{u}_k + \mathbf{w}_k$$

$$\mathbf{y}_k = \mathbf{H}\mathbf{x}_k + \mathbf{e}_k$$

$$\mathbf{w}_k : \mathbf{N}(0,\mathbf{W})$$

$$\mathbf{e}_k : \mathbf{N}(0,\mathbf{E}_k)$$

with

$$\mathbf{B}_k = \begin{pmatrix} \mathbf{R}(\mathbf{q}_k) & \mathbf{0} \\ \mathbf{0} & \mathbf{R}(\mathbf{q}_k) \end{pmatrix}^{\mathbf{T}}$$

$$\mathbf{y}_k = \mathbf{B}_k \mathbf{J}(\mathbf{q}_k)\dot{\mathbf{q}}_k$$

$$\mathbf{F} = \begin{pmatrix} \mathbf{I} & \mathbf{I}\Delta\mathbf{t} \\ \mathbf{0} & \mathbf{I} \end{pmatrix}$$

$$\mathbf{G} = \begin{pmatrix} \mathbf{I}\Delta\mathbf{t} \\ \mathbf{0} \end{pmatrix}$$

$$\mathbf{H} = (\mathbf{I} \ \mathbf{0})$$

$$\mathbf{W} = \mathbf{diag}(\sigma_u^2, \sigma_b^2)$$

$$\mathbf{E}_k = \mathbf{F}_c \mathbf{B}_k \mathbf{J}(\mathbf{q}_k)\mathbf{diag}(\sigma_{\dot{q}}^2)\mathbf{J}^{\mathbf{T}}(\mathbf{q}_k)\mathbf{B}_k^{\mathbf{T}}$$

where **k** is the discrete temporal index, $\Delta$**t** is the sampling step, $\mathbf{x}_k$ is the state vector, $\mathbf{y}_k$ is the measurement (also called observation) vector, $\mathbf{u}_k$ is the input vector, **F, G** and **H** are the matrices defining the dynamics of the state and measurement, **w** and **e** are the disturbances insisting respectively on the state and measurement, characterised by normal distributions with covariants **W** and **E**$_k$. **O** and **I** are respectively the null matrix and the identity matrix of proper dimensions, while **R(q**$_k$**)** and **J(q**$_k$**)** are respectively the rotation matrix and the manipulator Jacobian.
The state, that is the subject of the estimation, is the concatenation of the generalized Cartesian speed and of DAS bias.

The input is represented by the measurements originating from DAS and y is the speed calculated from the angular positions of the manipulator motors. Furthermore, $\sigma_u^2$ is the DAS covariance, $\sigma_b^2$ is the DAS bias covariance and $\sigma_{\dot{q}}^2$ is the encoder speed covariance.

The method requires the knowledge of the speed covariance of the position sensors that can be obtained alternatively by static acquisitions or by knowing the resolution of the position sensors themselves. Since the covariance of the nominal motor speed does not take into account all the present elasticity and flexibility factors, the tip speed uncertainty is far greater than the theoretical one and it is therefore necessary to add a factor of amplification of covariance (FAC) **F**$_c$, which determines the relative weight between the information originating from DAS and that originating from the position sensors: if the FAC is small, then the accelerations measured by the DAS will be further filtered; on the other hand, if it is greater, then the measurements of the position sensors will weigh less.

In one embodiment, the output of module 22 is represented by the projection on the joints, through the inverse of the Jacobian of the structure, of the generalized speed estimated on the tip.

Module 24 collects the results of module 22 (appropriately projected into the space of the joints by means of the product by the manipulator Jacobian), the measurements of the position sensors, and the measurements of the overall torque in order to perform an estimation of the angular positions at the links.-

In one embodiment, the equation of the overall torque on the motors is provided by the following equation:

$$\mathbf{M}\ddot{\mathbf{q}}_m + \mathbf{F}\dot{\mathbf{q}}_m + \mathbf{N}\,\mathbf{D}\,(\mathbf{N}\dot{\mathbf{q}}_m - \dot{\mathbf{q}}_l) + \mathbf{N}\,\mathbf{K}\,(\mathbf{N}\,\mathbf{q}_m - \mathbf{q}_l) = \boldsymbol{\tau} \qquad (1)$$

where **M** is the diagonal matrix of the axial inertia of the motors, **F** is the diagonal matrix of the viscous friction coefficients, **N** is the matrix of the gear ratios, **D** is the diagonal matrix of the damping, **K** is the diagonal matrix of the stiffness, **q**$_m$ are the angular positions at the motors, **q**$_l$ are the angular positions at the links, and $\tau$ is the overall torque.

In one embodiment, the matrix D is neglected since the coefficients of such matrix D are generally small and complex to identify.

In one embodiment, the transmitted torque $\tau$ is estimated based on the currents provided to the motors **i,** because at low frequencies the transmitted torque $\tau$ is approximately proportional to the current supplied to the motors i.

Thereby, after a series of algebraic manipulations, the following system in the state space is reached:

$$\frac{\mathrm{d}}{\mathrm{dt}}\begin{pmatrix}\mathbf{q}_l \\ \dot{\mathbf{q}}_l \\ \mathbf{q}_j \\ \dot{\mathbf{q}}_j\end{pmatrix} = \begin{pmatrix}\mathbf{O} & \mathbf{I} & \mathbf{O} & \mathbf{O} \\ \mathbf{O} & \mathbf{O} & \mathbf{O} & \mathbf{O} \\ \mathbf{O} & \mathbf{O} & \mathbf{O} & \mathbf{I} \\ \tilde{\mathbf{K}} & \mathbf{O} & -\tilde{\mathbf{K}} & -\tilde{\mathbf{F}}\end{pmatrix}\begin{pmatrix}\mathbf{q}_l \\ \dot{\mathbf{q}}_l \\ \mathbf{q}_j \\ \dot{\mathbf{q}}_j\end{pmatrix} + \begin{pmatrix}\mathbf{O} \\ \mathbf{O} \\ \mathbf{O} \\ \tilde{\mathbf{M}}\mathbf{K}_d\end{pmatrix}\mathbf{i} \qquad (2)$$

$$\tilde{\mathbf{M}} = \mathbf{N}\mathbf{M}^{-1}, \quad \tilde{\mathbf{F}} = \tilde{\mathbf{M}}\mathbf{F}\mathbf{N}^{-1}, \quad \tilde{\mathbf{K}} = \tilde{\mathbf{M}}\mathbf{N}\mathbf{K}$$

wherein **O** and **I** are, respectively, the null matrix and the identity matrix of appropriate dimensions, **q**$_j$ = **Nq**$_m$ are the angular positions at the joints, **K**$_d$ is the matrix of the torque constants and **i** is the current supplied to the motors.

In compact form, the system (2) can be written as follows:

$$\dot{\mathbf{x}} = \mathbf{A}\mathbf{x} + \mathbf{B}\mathbf{u} \qquad (3)$$

having defined:

$$\mathbf{x} \;=\; \left( \mathbf{q}_l^{\,T} \quad \dot{\mathbf{q}}_l^{\,T} \quad \mathbf{q}_j^{\,T} \quad \dot{\mathbf{q}}_j^{\,T} \right)$$

and $\mathbf{u} = \mathbf{i}$.

Until now a model for the joints elasticity has been described, neglecting the flexibility of the links.

In one embodiment, we have chosen the following simplified model of flexible link for implementation simplicity and with the object of not increasing the complexity of the method much:

$$\ddot{q}_b \;=\; 0 \qquad\qquad\qquad (4)$$

where the relation between $q_j$, $q_1$ and $q_b$ is represented for a single link in Figure 2. The quantity $q_b$ represents the deviation with respect to the overall angular position of the link due solely to its elastic deformation.

In order to correctly formulate the filter MKF it is therefore necessary to expand the state with the dynamics of $\mathbf{q}_b$ and formulate the observation relation:

$$\frac{d}{dt}\begin{pmatrix} \mathbf{q}_l \\ \dot{\mathbf{q}}_l \\ \mathbf{q}_j \\ \dot{\mathbf{q}}_j \\ \mathbf{q}_b \\ \dot{\mathbf{q}}_b \end{pmatrix} = \begin{pmatrix} \mathbf{O} & \mathbf{I} & \mathbf{O} & \mathbf{O} & \mathbf{O} & \mathbf{O} \\ \mathbf{O} & \mathbf{O} & \mathbf{O} & \mathbf{O} & \mathbf{O} & \mathbf{O} \\ \mathbf{O} & \mathbf{O} & \mathbf{O} & \mathbf{I} & \mathbf{O} & \mathbf{O} \\ \tilde{\mathbf{K}} & \mathbf{O} & -\tilde{\mathbf{K}} & -\tilde{\mathbf{F}} & \mathbf{O} & \mathbf{O} \\ \mathbf{O} & \mathbf{O} & \mathbf{O} & \mathbf{O} & \mathbf{I} & \mathbf{O} \\ \mathbf{O} & \mathbf{O} & \mathbf{O} & \mathbf{O} & \mathbf{O} & \mathbf{O} \end{pmatrix} \cdot \begin{pmatrix} \mathbf{q}_l \\ \dot{\mathbf{q}}_l \\ \mathbf{q}_j \\ \dot{\mathbf{q}}_j \\ \mathbf{q}_b \\ \dot{\mathbf{q}}_b \end{pmatrix} + \begin{pmatrix} \mathbf{O} \\ \mathbf{O} \\ \mathbf{O} \\ \tilde{\mathbf{M}}\mathbf{K}_d \\ \mathbf{O} \\ \mathbf{O} \end{pmatrix}\mathbf{i} \qquad (5)$$

$$\mathbf{y} \;=\; \begin{pmatrix} \mathbf{O} & \mathbf{I} & \mathbf{O} & \mathbf{O} & \mathbf{O} & \mathbf{I} \\ \mathbf{O} & \mathbf{O} & \mathbf{I} & \mathbf{O} & \mathbf{O} & \mathbf{O} \end{pmatrix} \begin{pmatrix} \mathbf{q}_l \\ \dot{\mathbf{q}}_l \\ \mathbf{q}_j \\ \dot{\mathbf{q}}_j \\ \mathbf{q}_b \\ \dot{\mathbf{q}}_b \end{pmatrix}$$

where $\mathbf{y}$ represents the measurement, composed of the concatenation of the angular positions originating from the position sensors at the motors (14) and from the module output 22. The latter is the total speed of the link which, according to the previous relation, is the sum of $\dot{\mathbf{q}}_b$ and $\dot{\mathbf{q}}_1$.

In one embodiment, the equation system (5) is successively discretized with a suitable sampling step (for example 2 ms) and the covariance matrices of state and measurement are characterised. Particularly, the covariance of state, indicated by $\mathbf{Q}$, represents the uncertainty on the current, while the measurement covariance, indicated by $\mathbf{R}$, represents the uncertainty on the encoder measurements and on the module outputs 22.

A possible use of the information originating from the previous modules is that of using the speed reference channel of the nominal regulator 40 to feedback a rate of the estimated transmitted torque on the joints and, therefore, a quantity proportional to

$$\mathbf{NK}(\mathbf{q}_l \;-\; \hat{\mathbf{q}}_l) ,$$

where $\hat{\mathbf{q}}_1$ represents the estimation of the link angular positions obtained by means of block 24.

In the case of rigid machines, the use of a control scheme with acceleration high-gain feedback allows to have the following advantages:

- good rejection to disturbances;
- strength with respect to the parametrical variations of the system to be controlled and to load variations;
- good trajectory tracking.

The solution for the estimation of the position and the control of the oscillations proposed herein, has been applied to a 6 axis industrial robot with a payload of 16 kg with a control configuration so as to be able to communicate with the PC on which the linear/angular acceleration signals as well as the signals of the motor encoder are processed, in order to provide a correction signal to be sent as speed feedforward to the numerical control without modifying its original architecture.

The oscillation control algorithm is suitable for application in the sector of special machines (for example, laser, water-jet, etc...) and of industrial manipulators and in general in all the situations where the contact forces between the machine and the external environment are not very large. For example, in the case of wood working, where the contact forces are small, the method for controlling the oscillations might increase the system performance allowing to enlarge the control band dampening the oscillations.

The estimation method is also suitable for integration in the part of the estimation of the information originating not only from the position sensors of the motors, but also from measurement sensors such as linear encoders, lasers or the like.

Naturally, various modifications to the construction details and embodiments may be possible, within the spirit of the invention according to that described and disclosed merely by way of example, without departing from the scope of the present invention, as defined by the following claims.

## Claims

1. A method for estimating the position of a series of articulated elements (or "links") being part of a machine wherein said articulated elements are connected between each other by means of articulated joints, said series terminating with a final articulated element, and wherein a plurality of motors are respectively associated with the articulated joints, **characterised in that** said method comprises:

   - determining (12) the linear and angular acceleration of the final articulated element,
   - measuring (14) the positions of the motors ($\mathbf{q}_j$),
   - estimating (20) the positions of the articulated elements ($\hat{\mathbf{q}}_1$) as a function of linear and angular acceleration (12) of the final articulated element and of the positions of the motors ($\mathbf{q}_j$).

2. Method according to claim 1, wherein said estimating (20) the positions of the articulated elements ($\hat{\mathbf{q}}_1$) includes estimating the angular positions being indicative for the positions of the articulated elements.

3. Method according to claim 2, wherein said method comprises:

   - controlling (30, 40) the mechanical oscillations of the machine (10) as a function of the angular positions being indicative for the positions of the articulated elements ($\hat{\mathbf{q}}_1$).

4. Method according to any of claims 2 or 3, wherein the method comprises determining the overall torque for each articulated element, and wherein said estimating (20) the angular positions being indicative for the positions of the articulated elements ($\hat{\mathbf{q}}_1$) comprises:

   - estimating (22) the speed of the articulated elements as a function of the linear and angular acceleration (12) of the final articulated element and of the positions of the motors ($\mathbf{q}_j$), and
   - estimating (24) the angular positions being indicative for the positions of the articulated elements ($\hat{\mathbf{q}}_1$) as a function of the speed of the articulated elements, the rotational positions of the motors ($\mathbf{q}_j$) and the overall torque for each articulated element.

5. Method according to claim 4, wherein said estimating (22) the speed of the articulated elements comprises using a first Kalman filter that is based on the kinematic model of the machine (10).

6. Method according any of claims 4 or 5, wherein said estimating (24) the angular positions being indicative for the positions of the articulated elements ($\hat{\mathbf{q}}_1$) comprises using a second Kalman filter that is based on the kinematic and elastic model of the machine (10).

**7.** Method according to claim 6, wherein said kinematic and elastic model of the machine (10) is a function:

- of the axial inertia of the motors **M,**
- of the viscous friction **F,**
- of the gear ratios **N,** and
- of the stiffness **K.**

**8.** Method according to claim 7, wherein said kinematic and elastic model of the manipulator (10) is based on the function:

$$\mathbf{M\ddot{q}}_m + \mathbf{F\dot{q}}_m + \mathbf{N}\ \mathbf{D}\ (\mathbf{N\dot{q}}_m - \dot{\mathbf{q}}_l) + \mathbf{N}\ \mathbf{K}\ (\mathbf{N}\ \mathbf{q}_m - \mathbf{q}_l) = \tau$$

wherein **D** is the diagonal matrix of damping, $\mathbf{q}_m$ are the angular positions at the motors, $\mathbf{q}_1$ are the angular positions at the articulated elements, and $\tau$ is the overall torque.

**9.** Method according to claims 7 or 8, wherein said determining the overall torque for each articulated element comprises estimating the overall torque based on the currents supplied to the motors.

**10.** Method according to claim 9, wherein said kinematic and elastic model is based on the following system in the state space:

$$\frac{d}{dt}\begin{pmatrix}\mathbf{q}_l\\ \dot{\mathbf{q}}_l\\ \mathbf{q}_j\\ \dot{\mathbf{q}}_j\\ \mathbf{q}_b\\ \dot{\mathbf{q}}_b\end{pmatrix} = \begin{pmatrix}\mathbf{O} & \mathbf{I} & \mathbf{O} & \mathbf{O} & \mathbf{O} & \mathbf{O}\\ \mathbf{O} & \mathbf{O} & \mathbf{O} & \mathbf{O} & \mathbf{O} & \mathbf{O}\\ \mathbf{O} & \mathbf{O} & \mathbf{O} & \mathbf{I} & \mathbf{O} & \mathbf{O}\\ \tilde{\mathbf{K}} & \mathbf{O} & -\tilde{\mathbf{K}} & -\tilde{\mathbf{F}} & \mathbf{O} & \mathbf{O}\\ \mathbf{O} & \mathbf{O} & \mathbf{O} & \mathbf{O} & \mathbf{I} & \mathbf{O}\\ \mathbf{O} & \mathbf{O} & \mathbf{O} & \mathbf{O} & \mathbf{O} & \mathbf{O}\end{pmatrix}\begin{pmatrix}\mathbf{q}_l\\ \dot{\mathbf{q}}_l\\ \mathbf{q}_j\\ \dot{\mathbf{q}}_j\\ \mathbf{q}_b\\ \dot{\mathbf{q}}_b\end{pmatrix} + \begin{pmatrix}\mathbf{O}\\ \mathbf{O}\\ \mathbf{O}\\ \tilde{\mathbf{M}}\mathbf{K_d}\\ \mathbf{O}\\ \mathbf{O}\end{pmatrix}\mathbf{i}$$

$$\tilde{\mathbf{M}} = \mathbf{NM}^{-1}, \quad \tilde{\mathbf{F}} = \tilde{\mathbf{M}}\mathbf{FN}^{-1}, \quad \tilde{\mathbf{K}} = \tilde{\mathbf{M}}\mathbf{NK}$$

wherein **O** and **I** are, respectively, the null matrix and the identity matrix, $\mathbf{q}_j$ are the angular positions at the articulated joints, $\mathbf{K}_d$ is the matrix of the constant torque and **i** is the current supplied to the motors.

**11.** Method according to claim 10, wherein said kinematic and elastic model is based on the following vector of observation **y:**

$$\mathbf{y} = \begin{pmatrix}\mathbf{O} & \mathbf{I} & \mathbf{O} & \mathbf{O} & \mathbf{O} & \mathbf{I}\\ \mathbf{O} & \mathbf{O} & \mathbf{I} & \mathbf{O} & \mathbf{O} & \mathbf{O}\end{pmatrix}\begin{pmatrix}\mathbf{q}_l\\ \dot{\mathbf{q}}_l\\ \mathbf{q}_j\\ \dot{\mathbf{q}}_j\\ \mathbf{q}_b\\ \dot{\mathbf{q}}_b\end{pmatrix}.$$

**12.** Method according to any of claims 1 to 11, wherein the estimated positions of the articulated elements $(\hat{\mathbf{q}}_l)$ are used to calculate (30) the correction data to compensate for the mechanical oscillations of the machine.

**13.** A system for estimating the position of a series of articulated elements being part of a machine wherein said articulated elements are connected between each other by means of articulated joints of prismatic or rotary type, said series terminating with a final articulated element, and wherein a plurality of motors are respectively associated with the articulated joints,
**characterised in that** said system comprises:

- an acceleration sensor (12) mounted on the final articulated element to determine the linear and angular acceleration of the final articulated element,
- a plurality of position sensors (14) to measure the rotary positions of the motors ($\mathbf{q}_j$),
- an estimation module (20), said module (20) being configured to implement the estimating method according to claims 1 to 12.

**Fig. 1**

**Fig. 2**

Europäisches
Patentamt

European
Patent Office

Office européen
des brevets

**EUROPEAN SEARCH REPORT**

Application Number

EP 08 42 5807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/111100 A (SINTESI S C P A [IT]; GUADAGNO GIANLUCA [IT]; NEGRI GIANPIERO [IT]; VE) 18 September 2008 (2008-09-18) * page 1, line 7 - line 10 * * page 7, line 11 - line 13 * * page 8, line 3 - line 13 * * page 11, line 21 - page 12, line 5 * * page 31, line 1 - line 8; figure 4 * * page 25, line 9 - line 16 * | 1,5,6,13 | INV. G05B13/04 G05B19/404 G05B19/416 B25J9/10 B25J9/16 B25J13/08 |
| Y | * page 23, line 10 - line 17 * * page 24 * * page 29, line 10 - line 12 * ----- | 4 | |
| X | MATSUOKA M ET AL: "Vibration suppression and disturbance rejection control of a flexible link arm" INDUSTRIAL ELECTRONICS, CONTROL, AND INSTRUMENTATION, 1995., PROCEEDIN GS OF THE 1995 IEEE IECON 21ST INTERNATIONAL CONFERENCE ON ORLANDO, FL, USA 6-10 NOV. 1995, NEW YORK, NY, USA,IEEE, US, vol. 2, 6 November 1995 (1995-11-06), pages 1260-1265, XP010154904 ISBN: 978-0-7803-3026-9 * abstract * * page 1261, line 21 - line 23 * | 1,3,9, 12,13 | TECHNICAL FIELDS SEARCHED (IPC) G05B |
| Y | * page 1261, column 1, line 18 - line 19 * ----- | 7 | |
| A | TSETSERUKOU D ET AL: "Vibration damping control of robot arm intended for service application in human environment" HUMANOID ROBOTS, 2008. HUMANOIDS 2008. 8TH IEEE-RAS INTERNATIONAL CONFERENCE ON, IEEE, PISCATAWAY, NJ, USA, 1 December 2008 (2008-12-01), pages 441-446, XP031409378 ISBN: 978-1-4244-2821-2 | 1-3,5-13 | |
| Y | * abstract * | 4 | |
| Y | * page 442, column 2, line 9 - line 15 * ----- | 7 | |

The present search report has been drawn up for all claims

| Place of search | Date of completion of the search | Examiner |
|---|---|---|
| Munich | 29 July 2009 | Lalinde, Rafael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 2 199 880 A1**

## ANNEX TO THE EUROPEAN SEARCH REPORT
## ON EUROPEAN PATENT APPLICATION NO.

EP 08 42 5807

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2009

| Patent document cited in search report | Publication date | Patent family member(s) | Publication date |
|---|---|---|---|
| WO 2008111100 A | 18-09-2008 | NONE | |

EPO FORM P0459

For more details about this annex : see Official Journal of the European Patent Office, No. 12/82

**EP 2 199 880 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19942738